(19)

Europäisches
Patentamt

European
Patent Office

Office européen
des brevets

(11) **EP 3 231 894 A1**

(12) **EUROPEAN PATENT APPLICATION**

(43) Date of publication:
**18.10.2017 Bulletin 2017/42**

(21) Application number: **16164941.3**

(22) Date of filing: **12.04.2016**

(51) Int Cl.:
*C23C 22/00* (2006.01)   *C23D 3/00* (2006.01)
*C23D 5/02* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Prince Belgium BVBA
8000 Brugge (BE)**

(72) Inventors:
• **DEMNATI, Imane
  8000 Brugge (BE)**

• **LIPS, Koen
  9031 Drongen (BE)**
• **LAUWERENS, Walter
  2930 Brasschaat (BE)**

(74) Representative: **Vanhalst, Koen et al
De Clercq & Partners cvba
E. Gevaertdreef 10a
9830 Sint-Martens-Latem (BE)**

Remarks:
Claims 16-18, 21, 23, 24 are deemed to be
abandoned due to non-payment of the claims fees
(Rule 45(3) EPC).

(54) **INORGANIC PRIMER FOR STEEL ENAMELLING**

(57)   The invention provides adherence improving formulations for coating enamels free of adherence oxides on iron alloy substrates. More specifically, the invention relates to a new adherence improving primer composition for use before enameling e.g. on steel substrates with enamels free of adherence oxides.

EP 3 231 894 A1

**Description**

**FIELD OF THE INVENTION**

The invention is situated in the field of vitreous enamel coatings, more particularly to vitreous enamel coatings for steels. The invention provides a method for improving adherence without the use of heavy metal oxides in the enamel. More specifically, the invention relates to a primer composition for treating steel just before enameling.

**BACKGROUND OF THE INVENTION**

Enamel has been used as a decorative material for over 4500 years. In the 19th century enameling became industrialized. The vitreous enamel coatings are mainly used to protect the substrate against any external aggressions (corrosion, scratches etc.) and at the same time it has a decorative aspect. Enamel can be classified as a glass due to its composition mainly based on silica (40 to 50%) and some other compounds as boron oxide, soda, feldspath, and other oxides, which are cross-linked to a three-dimensional network. The enamel formulation can differ depending on its use. Furthermore, it is well known in the art that vitreous enamel has very special properties which differ in many aspects from other coatings.

In general the enameling process comprises applying to the steel article a dark colored ground coat containing adherence oxides such as the heavy metal oxides: cobalt oxide, nickel oxide, copper oxide, or manganese oxide. The strong bond between the metal surface and the enamel is the result of complex reactions at the metal/enamel phase boundary during firing, typically at a temperature in the range of 800 to 860 °C. When a white or clear color final finish is desired, it becomes necessary to use a so-called cover-coat, which is white enamel or a transparent enamel with pigments that is fired on the top of the dark adherent ground coat.

There also exists another industrially used enameling process, using an electroless nickeled steel surface as substrate. During the firing an adherence providing intermetallic layer of the Fe-Ni-Ti-type is formed at the interface between steel and enamel whereby Ti comes from the used frits and Ni is the customarily used material for the pretreatment.

In practice a nickeled steel substrate is rarely used, and almost all enameled surface are based on an enamel layer containing heavy metal oxides (NiO, $Co_3O_4$ ... ) to obtain good adherence on steel. To reduce footprint on the environment, raw materials and energy consumptions and to provide safer product avoiding the use of dangerous substances, a new enameling process was developed for heavy metal-free enamels using a primer on a steel substrate just before enameling.

**SUMMARY OF THE INVENTION**

This invention discloses a way to realize the adherence of enamel on steel and iron alloy substrates without adding the usual adherence oxides which are heavy metal oxides and without having to apply a nickel layer to the substrate.

More specifically, the invention relates to a primer coating for treating the metal substrate before enameling. In particular, the invention relates to a primer composition ("primer"), based on molybdenum compounds that provides or improves adherence. The primer can be applied as a thin coating by common methods such as spraying, brushing, dipping, coil coating, flow coating and the like.

The primer as defined herein can particularly be used for enamels that do not need to contain any adherence oxides. This hence provides a possibility of using transparent enamels directly on the primed metal (steel) substrates. Metal oxides can however be added, in order to color the enamel, both as oxides in the frit or as oxides in the pigments. Such metal oxides can be added during the melting and/or the milling of the frits.

The composition of the primer according to the present invention comprises a mixture of metals, metal oxides, and/or metal salts or metallates. We will use the term inorganic salts to indicate both metal salts and metallates. The term mixture describes the physical blend of said metals, metal oxides, and/or metal salts or metallates. However, the term doesn't mean that there cannot be a chemical reaction that occurs between the several components. Other components such as inorganic salts, more particularly metallates, can be added to the mixture in order to increase physical or chemical properties, for example to improve rheology.

Metallates as used herein are anions or salts containing a metal atom ligated to one or more oxygen or other atoms, or to small groups. Examples of metallates that can be used in the present invention are molybdates, borates, silicates, zirconates, tungstates, cobaltates, antimonates, and aluminates.

The primer as defined herein can be applied to the steel substrate before or after the article to be coated is constructed (using e.g. welding, cutting, deep drawing, cleaning, etc.). A big advantage lies in the possibility to apply the primer on the finally constructed article, just before enameling.

The present invention hence relates to an inorganic composition for use as primer for metal enameling. This is in contrast to e.g. the organic (polymeric) layers reported on in e.g. WO2009087217A1. The disadvantage of using a polymer binder can be the poor wettability of an enamel on a polymer layer during both application and firing processes. In addition, the homogeneity and stability of the primer suspension is altered when adding an acidic oxide (for example $MoO_3$ has a pH 3) leading to agglomeration and difficult application of the primer to the steel substrate. A further disadvantage is that the polymer binder is burned and outgassed during the firing process and this can cause defects in the enamel layer.

More specifically, the invention relates to a Mo-based primer composition for use before enameling without needing the usual adherence oxides and without needing applying nickel to the metal substrate.

In this respect, Kautz et al., 1945 (J. American Ceramic Society, 1945, Vol. 25, No.6, pp. 160-163) reported that $Sb_2O_3$ and $MoO_3$ milled with a frit result in good adherence. In said paper, the best adherence has been obtained when $Sb_2O_3$ is between 1-4% and $MoO_3$ between 1-2% and the ratio of Sb oxide to Mo oxide is equal to 2. Further it is hypothesized in said paper that the addition of $Sb_2O_3$ and $MoO_3$ together to a mill containing a frit will improve the adherence. Upon repeating said examples and comparing them with the effect of using the primers of the present invention, we can conclude that the addition of Molybdenum-compounds directly to the frit or smelted in, do not significantly improve the adherence of a heavy-metal free frit to an iron alloy or steel substrate. When comparing these results with the adherence obtained when the primer comprising molybdenum-compounds of the invention is applied on the steel or iron alloy substrate, the latter is clearly outperforming the addition of molybdenum-compounds in the frits, which was highly unexpected. Similar results have been obtained with cobalt-tungsten- and antimony-based primer compositions.

This invention is equally related to the enameled steel substrates and more especially to adherent enamels for steel which do not contain any adherence oxides. Further the enamels do comply with all traditional quality demands as set by the European Enamel Authority (EEA quality requirements vs.4.1, 2014).

The invention further provides in the use of the primer as defined herein for improving adherence of enamel formulations without heavy metals such as Ni, Co, Cu, Mn, Fe, to metal substrates such as iron and steel. The improved adherence is based on the formulation of a new primer used as a pretreatment for the metal substrate.

The invention provides the following aspects:

Aspect 1. A primer comprising:

- metals, metal salts or oxides,
- an inorganic salt,
- a solvent, and
- optionally additives.

Preferably, said inorganic salts can be metallates such as molybdates, silicates, borates aluminates, zirconates, cobaltates, antimonates, or tungstates. Preferred examples are sodium-borate, potassium-borate, potassium molybdate, or sodium-molybdate.

Preferably, when said primer comprises a metal salt, the inorganic salt can be part of, or comprised in, said metal salt.

Preferably, said metals are selected from the group comprising: Co, W, Mo and Sb and/or said metal salts, metallates, metal or oxides are the salts metallates or oxides of a metal chosen from the group comprising: Co, W, Mo and Sb.

In some embodiments, such a composition can be used to provide adherence of adherence-metal-oxide free enamels to an iron alloy or steel substrate.

Aspect 2. The primer according to aspect 1, wherein said optional additives are selected from the group comprising: inorganic binders, fillers, and/or surface wetting agent(s).

Aspect 3. The primer according to aspects 1 or 2, wherein said metals are chosen from the groups comprising: Co, W, Mo and Sb or wherein said metal salt or oxide is the salt or oxide of a metal chosen from the group comprising: Co, W, Mo and Sb.

Aspect 4. The primer according to any one of aspects 1 to 3, wherein the solvent is selected from the group comprising: water, alcohol such as e.g. ethanol, or propanol, or combinations thereof.

Aspect 5. The primer according to any one of aspects 1 to 4, wherein said metal, metal salt or metal oxide is a Molybdenum-compound, preferably wherein the Molybdenum-compound comprises: metallic Molybdenum, Molybdenum-salts, Molybdates, or Molybdenum-oxides. Preferred Molybdates are: sodium Molybdate, potassium Molybdate, calcium Molybdate, bismuth Molybdate, cerium Molybdate, ammonium Molybdate, lithium Molybdate, barium Molybdate, antimony Molybdate, zinc Molybdate, lead Molybdate, iron Molybdate, tin Molybdate, barium-antimony Molybdate, calcium-antimony Molybdate, sodium-antimony Molybdate or potassium-antimony Molybdate.

In more preferred embodiments, the Molybdenum-compound comprises one or more of the following combinations:

- Molybdate alone or with Mo, $MoO_2$, $MoO_3$;

- $MoO_3$ alone, or combined with Molybdate or $MoO_2$;

- $MoO_2$ alone, or combined with Molybdate or $MoO_3$;

- Metallic Molybdenum alone, or associated with Molybdate;

or combinations thereof, wherein said Molybdate is selected from sodium Molybdate, potassium Molybdate, calcium Molybdate, bismuth Molybdate, cerium Molybdate, ammonium Molybdate, lithium Molybdate, barium Molybdate, antimony Molybdate, zinc Molybdate, lead Molybdate, iron Molybdate, tin Molybdate, barium-antimony Molybdate, calcium-antimony Molybdate, sodium-antimony Molybdate and potassium-antimony Molybdate, preferably sodium Molybdate, or potassium Molybdate.

Aspect 6. The primer according to any one of aspects 1 to 5, wherein said primer additionally comprises one or more metal oxides or salt selected from the group comprising: oxides or salts of Co, Fe, Cu, W, Mo or Sb, preferably an Antimony-compound, preferably an antimony-oxide or antimony-salt, most preferably $Sb_2O_3$ or $SbCl_3$.

Aspect 7. The primer according to any one of aspects 1 to 6, wherein as an additive, a filler can be present such as clay, more preferably dispersing clay such as kaolinite, bentone or bentonite.

Aspect 8. The use of a primer according to any one of the previous aspects, for providing adherence of enamels free from adherence oxides, to iron alloy or steel substrates.

Aspect 9. A method of providing adherence of enamels free from adherence oxides to iron alloy or steel substrates comprising the step of applying on said substrate a primer as defined in any one of the aspects 1 to 7.

Aspect 10. A method of enameling an iron alloy or steel substrate with an enamel free from adherence oxides comprising the steps of:

- Applying on said substrate a primer as defined in any one of the aspects 1 to 7; and

- Applying on the top of said primer, an enamel layer, followed by a firing step, thereby obtaining an enameled substrate.

Aspect 11. The method according to aspect 9 or 10, wherein said primer is applied to the substrate by spraying, dipping or coil coating.

Aspect 12. The method according to aspect 9 or 10, wherein said primer is dried onto the substrate, more preferably through hot air convection.

Aspect 13. The method according to aspect 9 or 10, wherein said enamel is applied to the primed substrate through wet dipping, flow-coating, spraying, wet electrostatic coating, electrophoretic coating, dusting or dipping, powder electrostatic coating (POESTA), or combinations thereof

Aspect 14. The primer or use according to any one of the previous aspects, wherein said enamel is transparent, white, or semi-opaque.

Aspect 15. The primer or use according to any one of the previous aspects, wherein said enamel is additionally colored using pigments.

Aspect 16. The primer or use according to any one of the previous aspects, wherein said substrate comprises a material selected from the group comprising: steel, aluminized steel, pickled nickel coated steel, stainless steel, galvanized steel, and cast iron.

Aspect 17. The method according to any one of the previous aspects, wherein said substrate is cleaned and degreased before application of the primer composition.

Aspect 18. The method according to any one of the previous aspects, further comprising firing the enamel at a firing temperature of between 700 and 900 °C for about 1 to 15 minutes.

Aspect 19. The method according to any one of the previous aspects, wherein additionally a second enameling step is performed, followed by a second firing step.

Aspect 20. A method of providing adherence of enamels free from adherence-metal-oxides to an iron alloy or steel substrate comprising the steps of:

- Applying on said substrate, prior to application of an enamel, a primer as defined in any one of the previous aspects, wherein said primer is applied to said substrate in an amount of at least 0.5 $g/m^2$ to 100 $g/m^2$ dry coating weight of said metal, metal salt or metal oxide, preferably of between 0.1 $g/m^2$ to 80 $g/m^2$ dry coating weight of said metal, metal salt or metal oxide.

Aspect 21. A method for enameling an iron or steel substrate with an enamel free from adherence-metal-oxides, comprising the steps of:

- Applying on said substrate, prior to application of an enamel, a primer as defined in any one of the previous aspects, wherein said primer is applied to said substrate in an amount of at least 0.5 $g/m^2$ to 100 $g/m^2$ dry coating weight of said metal, metal salt or metal oxide, preferably of between 0.1 $g/m^2$ to 80 $g/m^2$ dry coating weight of said metal, metal salt or metal oxide; and

- Applying on the top of said primer layer, said enamel, followed by a firing step, thereby obtaining an enameled iron or steel substrate.

Aspect 22. The method according to aspects 20 or 21, wherein said primer is applied to said substrate by spraying, dipping, dry coating, or coil coating.
Aspect 23. The method according to anyone of aspects 20 to 22, wherein said primer is dried onto the substrate, more preferably through hot air convection.
Aspect 24. The method according to anyone of aspects 20 to 23, wherein said primer is applied to the substrate as a conversion coating.
Aspect 25. A primer for providing adherence of adherence oxide free enamels to an iron alloy or steel substrate comprising:

- from 40-80 % w/w water,

- from 0.9-50 % w/w metal, metal salt or metal oxide; and optionally

- from 0-30 % w/w inorganic salt(s),

- from 0-50 % w/w filler(s),

- from 0-20 % w/w further metal oxides, and/or

- from 0.05-0.5 % w/w surface wetting agent(s), wherein said metal is selected from the group comprising: Mo, W, Sb, Cu and Co and/or wherein said metal salt or metal oxide is the salt or oxide of a metal selected from the group comprising: Mo, W, Sb, and Co, preferably Mo, preferably Co, preferably W, preferably Sb. In a particularly preferred embodiment, said metal, metal oxide or metal salt is a Molybdenum compound as defined herein. In another particularly preferred embodiment, said metal, metal oxide or metal salt is a cobalt oxide, preferably $Co_3O_4$. In another particularly preferred embodiment, said metal, metal oxide or metal salt is a tungsten oxide, preferably $WO_3$.

Preferably, said inorganic salts can be metal salts and/or metallates such as molybdates, borates, tungstates, silicates, aluminates, cobaltates, antimonates, or zirconates. Preferred examples are molybdates and/or borates such as sodium-borate, potassium-borate, potassium molybdate, or sodium-molybdate.
Aspect 26. The primer according to aspect 25, comprising:

- from 40-80 % w/w water,

- 20-50 % w/w metal salt selected from the salt of Mo, Co, W, or Sb,

- 0-20 % w/w metal oxide selected from the oxide of Mo, Co, W, or Sb,

- 0-10 % w/w filler(s),

- 0-0.50 % w/w wetting agent(s)

- 0-10 % w/w inorganic salt(s).

In preferred embodiments, said metal salt is a molybdenum salt or a Molybdate, preferably wherein said molybdate is selected from: sodium Molybdate, potassium Molybdate, calcium Molybdate, bismuth Molybdate, cerium Molybdate, ammonium Molybdate, lithium Molybdate, barium Molybdate, antimony Molybdate, zinc Molybdate, lead Molybdate, iron Molybdate, tin Molybdate, barium-antimony Molybdate, calcium-antimony Molybdate, sodium-antimony Molybdate and potassium-antimony Molybdate, preferably sodium Molybdate, or potassium Molybdate.
In preferred embodiments, said metal salt is a cobalt salt or a cobaltate.
In preferred embodiments, said metal salt is a tungsten salt or a tungstate.
In preferred embodiments, said metal salt is an antimony salt or an antimonate.

Preferably, said inorganic salts can be metal salts and/or metallates such as molybdates, borates, tungstates, silicates, aluminates, cobaltates, antimonates, or zirconates. Preferred examples are molybdates and/or borates such as sodium-borate, potassium-borate, potassium molybdate, or sodium-molybdate.

Aspect 27. A primer for providing adherence of adherence oxide free enamels to an iron alloy or steel substrate comprising:

- from 20-60 % w/w water,

- from 7.5-50 %w/w metal oxide selected from Mo-, W-, Sb-, and Co-oxide; and optionally

- from 0-10 % w/w inorganic salt(s),

- from 25-50 % w/w filler(s),

- from 0-20 % w/w further metal oxides, and/or

- from 0.05-0.5 % w/w surface wetting agent(s), wherein said metal oxide is the oxide of a metal selected from the group comprising: Mo, W, Sb, and Co, preferably Mo, preferably Co, preferably W, preferably Sb.

Preferably, said inorganic salts can be metallates such as molybdates, silicates, borates aluminates, zirconates, cobaltates, antimonates, or tungstates. Preferred examples are molybdates and/or borates such as sodium-borate, potassium-borate, potassium molybdate, or sodium-molybdate.

Aspect 28. An enamel coated object, comprising a primer layer comprising the primer according to anyone of the previous aspects, forming an interface between the substrate and the enamel coating.

Aspect 29. The object according to aspect 28, wherein only said interface comprises said metal, metal oxide, or metal salt, more preferably wherein said metal, metal oxide, or metal salt is detectable only in the lower 50%, preferably the lower 15% to 25% of the enamel coating starting from the interface.

Aspect 30. Use of a composition (e.g. an aqueous dissolution) comprising a metallate selected from Molybdate, tungstate, or cobaltate, applied as a conversion coating or precoating for providing adherence of enamels free of adherence metal oxides to iron alloy or steel substrates. In such a case, the conversion coating is created on the iron alloy or steel surface directly through chemical conversion, i.e. the iron alloy or steel surface is exposed to an aqueous chemical solution in which the metallate salt (molybdate, tungstate, or cobaltate) is dissolved at a concentration of typically 0.1 to 1.0 M. At low pH (typically lower than 4) the iron alloy or steel surface reacts with the solution and a conversion coating composed of iron molybdate, iron tunstate, or iron cobaltate is formed.

Aspect 31. The use of a primer comprising:

- Molybdenum-compounds selected from the group comprising: metallic Molybdenum, Molybdate, and Molybdenum-oxides,
- water or solvents,
- one or more inorganic salt(s), and
- optionally one or more additive(s),

for providing adherence of adherence- metal-oxide free enamels to an iron alloy or steel substrate.

Aspect 32. The use according to aspect 31, wherein said inorganic salt is a metal salt or a metallate, selected from the group comprising: molybdates, silicates, aluminates, zirconates, tungstates, cobaltates, antimonates, or borates. Preferred examples are molybdates and borates such as sodium-borate, potassium-borate, potassium molybdate, and sodium-molybdate.

Aspect 33. The use according to aspect 31, wherein said primer additionally comprises an Antimony-compound, preferably an Antimony-oxide or Antimony-salt, most preferably $Sb_2O_3$ or $SbCl_3$.

Aspect 34. The use according to any one of aspects 31 to 33, wherein said additive is an inorganic binder or filler such as clay, more preferably dispersing clay such as kaolinite, bentone or bentonite.

Aspect 35. The use according to any one of aspects 31 to 34, wherein said primer additionally comprises one or more metal oxides selected from the group comprising: oxides of Co, Fe, W, Cu, Mo or Sb.

Aspect 36. The use according to any one of aspects 31 to 35, wherein the Molybdenum-compound of said primer solution comprises one or more of the following combinations:

- Molybdate alone or with Mo, $MoO_2$, $MoO_3$;

- $MoO_3$ alone, or combined with Molybdate or $MoO_2$;

- $MoO_2$ alone, or combined with Molybdate or $MoO_3$;

- Metallic Molybdenum alone, or associated with Molybdate;

or combinations thereof, wherein said Molybdate is selected from the group comprising: sodium Molybdate, potassium Molybdate, calcium Molybdate, bismuth Molybdate, cerium Molybdate, ammonium Molybdate, lithium Molybdate, barium Molybdate, antimony Molybdate, zinc Molybdate, lead Molybdate, iron Molybdate, tin Molybdate, barium-antimony Molybdate, calcium-antimony Molybdate, sodium-antimony Molybdate and potassium-antimony Molybdate, preferably sodium Molybdate, or potassium Molybdate.

Alternative primer compositions (designated "EP" for "EcoPremail") comprise:

|  | EP1 | EP2 | EP3 | EP4 | EP5 |
|---|---|---|---|---|---|
| Mo compound | $Na_2MoO_4$ 20-50 % | $Na_2MoO_4$ 15-25 % | $MoO_3$ 0.9-40% | $MoO_2$ 0.9-50 % | Mo 7.50-40 % |
| Additional Mo compound | - | 10-20 % | 0-10% | 0-10 % | 0-10 % |
| Fillers (clay & silica) | - | 0-10 % | 0-25 % | 0-28 % | 0-30 % |
| Wetting agent | - | 0.05-0.50 % | 0.05-0.50 % | 0.05-0.50 % | 0.05-0.50 % |
| Water | 50-80 % | 40-50 % | 45-60 % | 45-60 % | 45-60 % |
| others oxides | - | - | 0-20 % | 0-20 % | 0-7.50 % |
| Inorganic salts | - | 0-10 % | 0-30 % | 0-30 % | 0-10 % |

Aspect 37. The use according to aspect 36, wherein said primer composition combines any one of said Molybdenum-compound combinations with $Sb_2O_3$.

Aspect 38. A method of providing adherence of enamels free from adherence-metal-oxides to an iron or steel substrate comprising the steps of:

- Applying on said substrate, prior to application of an enamel, a primer composition as defined in any one of aspects 31 - 37, wherein said primer composition is applied to said substrate in an amount of 0.5 $g/m^2$ to 100 $g/m^2$ dry coating weight of said Molybdenum-compound, preferably of between 0.1 $g/m^2$ to 80 $g/m^2$ dry coating weight of said Molybdenum-compound.

Aspect 39. A method for enameling an iron or steel substrate with an enamel free from adherence-metal-oxides, comprising the steps of:

- Applying on said substrate, prior to application of an enamel, a primer composition as defined in any one of aspects 31 - 37, wherein said primer composition is applied to said substrate in an amount of 0.5 $g/m^2$ to 100 $g/m^2$ dry coating weight of said Molybdenum-compound, preferably of between 0.1 $g/m^2$ to 80 $g/m^2$ dry coating weight of said Molybdenum-compound; and
- Applying on the top of said primer layer, said enamel frit, followed by a firing step, thereby obtaining an enameled iron or steel substrate.

Aspect 40. The method according to aspect 38 or 39, wherein said primer composition is applied to said substrate by spraying, dipping, dry coating, or coil coating.

Aspect 41. The method according to anyone of aspects 38 to 40, wherein said primer composition is dried onto the substrate, more preferably through hot air convection.

Aspect 42. The method according to aspect 38 or 39, wherein said primer composition is applied to substrate as a conversion layer.

Aspect 43. Use according to any one of aspects 31 to 37, or method according to any one of aspects 38 to 41 wherein said enamel is transparent, white, or semi-opaque.

Aspect 44. Use according to any one of aspects 31 to 37, or 43, or method according to any one of aspects 38 to 42, wherein said enamel is colored using pigments.

Aspect 45. The use according to any one of aspects 31 to 37, or 43 to 44 or the method according to any one of aspects 8 to 12, wherein said substrate comprises a material selected from the group comprising: enameling steel, aluminized steel, pickled nickel coated steel, stainless steel, or cast iron.

Aspect 46. The use according to any one of claims 31 to 37, or 43 to 45, or the method according to any one of aspects 38 to 42, comprising the application of the primer on the cleaned and degreased metal, followed by application of the enamel by all possible methods.

Aspect 47. The method according to any one of aspects 38 to 42, wherein said firing step is done at a firing temperature of between 700 and 900 °C for about 1 to 15 minutes.

Aspect 48. The method according to any one of claims 38 to 42, wherein additionally a second enamel is applied on the first enamel, followed by a second firing step.

Aspect 49. A primer for providing adherence of heavy-metal free enamels to an iron alloy or steel substrate comprising:

- from 30-50 % w/w water
- from 15-50 %w/w Molybdenum-compounds selected from the group comprising: metallic Molybdenum, Molybdate, and Molybdenum-oxides;
- from 0-10 % w/w inorganic salt(s),
- from 0.25-20 % w/w filler(s),
- from 0-20 % w/w further metal oxides, and
- from 0.05-0.5 % w/w surface wetting agent(s).

Preferably, said inorganic salts can be molybdates, silicates, alumina, zirconium salts or borates. Preferred examples are sodium-borate, potassium-borate, potassium molybdate, or sodium-molybdate.

Aspect 50. The primer composition according to aspect 49, comprising:

- from 45-50 % w/w water,
- 15-20 % w/w Molybdate(s),
- 0-20 % w/w Mo, $MoO_2$, or $MoO_3$,
- 0.25-10 % w/w filler(s),
- 0.05-0.5 % w/w wetting agent(s), and
- 5-10 % w/w inorganic salt(s).

Preferably, preferably wherein said inorganic salt is a metal salt or a metallate, selected from the group comprising: molybdates, silicates, aluminates, zirconates, tungstates, cobaltates, antimonates, or borates. Preferred examples are sodium-borate, potassium-borate, potassium molybdate, or sodium-molybdate.

Preferably said Molybdates are selected from the group comprising: sodium Molybdate, potassium Molybdate, calcium Molybdate, bismuth Molybdate, cerium Molybdate, ammonium Molybdate, lithium Molybdate, barium Molybdate, antimony Molybdate, zinc Molybdate, lead Molybdate, iron Molybdate, tin Molybdate, barium-antimony Molybdate, calcium-antimony Molybdate, sodium-antimony Molybdate and potassium-antimony Molybdate, preferably sodium Molybdate, or potassium Molybdate.

Aspect 51. An enamel coated object, comprising a primer layer comprising the primer composition according to aspect 49 or 50, forming an interface between the substrate and the enamel coating.

Aspect 52. The object according to aspect 51, wherein only said interface comprises Molybdenum.

Aspect 53. The object according to aspect 51 or 52, wherein said Molybdenum is detectable only in the lower 50% of the enamel coating starting from the interface, preferably in the lower 15-25% of the enamel coating starting from the interface.

Aspect 54. Use of a composition (e.g. an aqueous dissolution) comprising:

- 20-40 % w/w Molybdate, and
- 60-80 % w/w water, as a conversion coating or precoating for providing adherence of enamels free of adherence metal oxides to iron alloy or steel substrates. In such a case, the conversion layer is created on the iron alloy or steel surface directly through chemical conversion, i.e. the iron alloy or steel surface is exposed to an aqueous chemical solution in which the molybdate is dissolved at a concentration of typically 0.1 to 1.0 M. At low pH (typically lower than 4) the iron alloy or steel surface reacts with the solution and a conversion coating composed of iron molybdate is formed. Said process can be improved by heating the composition to a temperature of between 60 and 90°C, preferably of between 70 and 85 °C, more preferably of about 80°C, in the presence of the iron alloy or steel surface.

Preferably said Molybdate is selected from the group comprising: sodium Molybdate, potassium Molybdate, calcium Molybdate, bismuth Molybdate, cerium Molybdate, ammonium Molybdate, lithium Molybdate, barium Molybdate, antimony Molybdate, zinc Molybdate, lead Molybdate, iron Molybdate, tin Molybdate, barium-antimony Molybdate, calcium-antimony Molybdate, sodium-antimony Molybdate and potassium-antimony Molybdate, preferably sodium Molybdate, or potassium Molybdate.

## BRIEF DESCRIPTION OF THE FIGURES

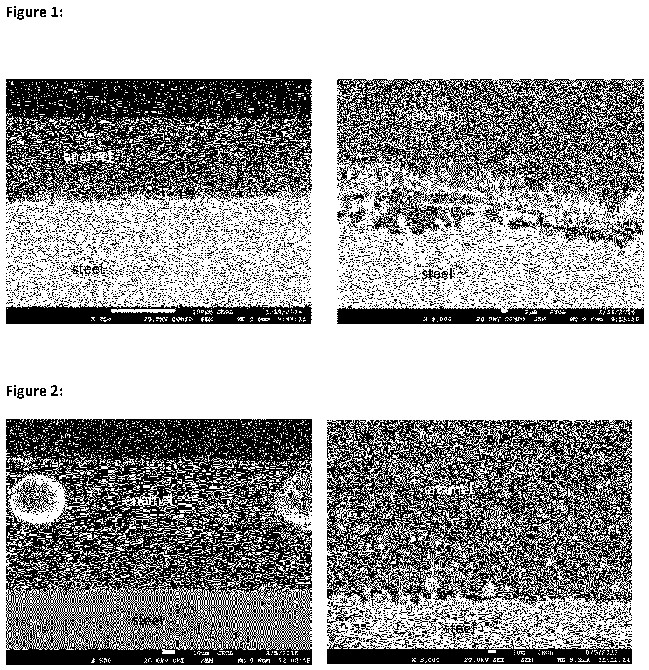

**Figure 1:** SEM image of the interface of an enameled steel sample coated with the primer of the invention and enameled with a frit free from adherence oxides. Magnification is respectively 250x and 3000x in left hand and right hand picture. The Molybdenum is confined to the interface (maximum 15% of the enamel layer) and the interaction between the primed steel substrate and the enamel creating a certain degree of roughness in the interface is clearly visible. This indicates that there was a strong interaction between the enamel and the primed steel substrate during firing, resulting in improved adherence.

**Figure 2:** SEM image of the interface of an enameled steel sample using a frit containing $MoO_3$ as suggested in Kautz et al., 1945. Magnification is respectively 500x and 3000x in left hand and right hand picture. The Molybdenum in this example is present throughout the enamel (at least in 50% of the enamel layer) and the interface of the enamel with the steel substrate shows smaller roughness, indicating less interaction between the enamel and the substrate. This results in smaller improvement of adherence.

## DETAILED DESCRIPTION OF THE INVENTION

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms also encompass "consisting of" and "consisting essentially of", which enjoy well-established meanings in patent terminology.

The recitation of numerical ranges by endpoints includes all numbers and fractions subsumed within the respective ranges, as well as the recited endpoints.

The terms "about" or "approximately" as used herein when referring to a measurable value such as a parameter, an amount, a temporal duration, and the like, are meant to encompass variations of and from the specified value, such as variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Whereas the terms "one or more" or "at least one", such as one or more members or at least one member of a group of members, is clear per se, by means of further exemplification, the term encompasses inter alia a reference to any one of said members, or to any two or more of said members, such as, e.g., any $\geq 3$, $\geq 4$, $\geq 5$, $\geq 6$ or $\geq 7$ etc. of said members, and up to all said members. In another example, "one or more" or "at least one" may refer to 1, 2, 3, 4, 5, 6, 7 or more.

The discussion of the background to the invention herein is included to explain the context of the invention. This is not to be taken as an admission that any of the material referred to was published, known, or part of the common general knowledge in any country as of the priority date of any of the claims.

Throughout this disclosure, various publications, patents and published patent specifications are referenced by an identifying citation. All documents cited in the present specification are hereby incorporated by reference in their entirety. In particular, the teachings or sections of such documents herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the invention. When specific terms are defined in connection with a particular aspect of the invention or a particular embodiment of the invention, such connotation is meant to apply throughout this specification, i.e., also in the context of other aspects or embodiments of the invention, unless otherwise defined.

In the following passages, different aspects or embodiments of the invention are defined in more detail. Each aspect or embodiment so defined may be combined with any other aspect(s) or embodiment(s) unless clearly indicated to the contrary. In particular, any feature indicated as being preferred or advantageous may be combined with any other feature or features indicated as being preferred or advantageous.

Reference throughout this specification to "one embodiment", "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

The term "frit" as used herein encompasses the flakes or granules obtained by melting (or fritting) the mixed enamel components at a typical temperature between 1100 to 1500 °C whereby a glass-structure is formed, followed by cooling of said molten glass to room temperature, mostly between cooling rolls or with water.

The term "enamel" as used herein encompasses the enamel composition obtained by milling the frit in combination with additives and colorants or pigments.

The terms "enamel" "vitreous enamel" "porcelain enamel" and "enamel composition" are used as synonyms herein. Enamel is a mainly vitreous material, which is obtained by the melting or fritting of a mixture of inorganic materials, which is applied to a metal substrate in either the form of a suspension in water or a dry powder, in one or more layers, and which will be bonded chemically and physically to the metal substrate when heated to a temperature sufficient for fusion to take place (firing). According to EN 1900 enamel is a substance, resulting from the melting or sintering of inorganic constituents and designed to form a surface layer which is fused or capable of being fused, in one or more coats, and the firing temperature of which is higher than 500°C.

The term "enameling" is the manufacturing process of the enameling article.

The term "firing" encompasses the heating step to allow the enamel to finally react with and attach to the substrates surface. The enamel composition hereby is changing from a biscuit (powder) into a glass-like coating. Firing typically is done in particular types of ovens such as box-furnaces, charge furnaces, tunnel-furnaces, conveyer-belt furnaces, continuous furnaces, having U- or L-type heating chambers. Important is that the ovens have a uniform heat distribution in the chamber, with as little as possible temperature-fluctuations in function of time and position in the chamber.

Applying the enamel encompasses all possible techniques for bringing the enamel on the substrate, such as, but not limited to: wet dipping, flow-coating, spraying, wet electrostatic coating, electrophoretic coating, dusting or dipping, powder electrostatic coating (POESTA), or combinations thereof.

The term "adherence" encompasses the lasting bond between the enamel layer and its substrate and is the result of complex reactions at the metal/enamel interface. The testing of the adherence strength of the porcelain and vitreous enamel coating should be carried out using the methods as specified in EN 10209. In essence, such a test will determine the damage caused by a weight falling on the enameled substrate. It is scored from 1 to 5, wherein 1 indicates very good adherence and 5 indicates poor adherence.

The term "adherence oxides" or "adherence metal oxides" encompasses adherence providing oxides that are added to a ground enamel or direct enamel in order to create adherence between the substrate and the enamel, as a consequence of redox-reactions during the firing of the enamel onto the substrate. The main adherence oxides are metal oxides such as: $CoO$, $Co_2O_3$ and $NiO$, but also $MnO$, $CuO$, $FeO$ are used as adherence oxides. In addition to providing adherence, those oxides can also be used for coloring the enamel layer. However, if the only goal of the oxide is to color the enamel layer, we do not consider it as adherence oxide. The term "adherence metal oxides" is also used as synonym for "adherence oxides"

The term "iron alloy and steel substrate" encompasses the substrate of all Fe-metals. Lamellar grey cast iron and steel sheet after EN10209 are commonly used for enameling. But any other iron or steel quality can also be enameled. The main problems seen with those other qualities are that the enamel layer can have a scummy surface, can chip off or can show fishscaling. Some examples of metals that can be used with the primer composition of the present invention are: enameling steel, aluminized steel, pickled nickel coated steel, stainless steel, or cast iron.

The primer as disclosed herein is suitable for improving the adherence of enamels that do not contain adherence oxides on iron alloy or steel substrates. The primer is applied as a thin coating to the substrate before application of the enamel.

The enameling can be done with a one-coat-one-fire process, implying that the enamel is applied directly to the primed substrate and fired at a temperature of e.g. between 760°C-860°C.

Also a two-coat-one-fire or a two-coat-two-fire enamel process is possible. Subsequently to the application of a first layer on the primed substrate, a second coat of enamel is applied and fired at a temperature typically of between 760°C-860°C

The primers or primer compositions of the present invention are suitable for improving the adherence of enamels that do not contain adherence metal oxides, on iron alloy or steel substrates.

The primer composition is applied as a thin coating to the substrate before application of the enamel.

The primer composition typically encompasses metal, metal oxides or metal salts in a solvent such as water, or alcohols such as e.g. ethanol or propanol. Said metals are chosen from the groups consisting of Co, W, and Mo and/or metal salts or oxides thereof. Preferably, said metal is Molybdenum and/or metal salts or oxides thereof.

The primer of the present invention can be in the form of a liquid solution or can be in powder form. Although we will explain in detail the use of the liquid primer solution, said details also apply to the primer applied on the substrate as a powder.

In a particularly preferred embodiment, the metal is Molybdenum and the primer comprises Molybdemun compounds.

Molybdenum-compounds as used herein are the active components which result in the adherence improvement between the iron or steel substrate and the enamel layer by chemical / electrochemical reactions. In essence, any type of Molybdenum-containing component can be used, which can be metallic Molybdenum, Molybdenum-salts, Molybdates, or Molybdenum-oxides. Molybdates are compounds containing an oxoanion with molybdenum in its highest oxidation state of 6.

Preferably said Molybdate is selected from the group comprising: sodium Molybdate, potassium Molybdate, calcium Molybdate, bismuth Molybdate, cerium Molybdate, ammonium Molybdate, lithium Molybdate, barium Molybdate, antimony Molybdate, zinc Molybdate, lead Molybdate, iron Molybdate, tin Molybdate, barium-antimony Molybdate, calcium-antimony Molybdate, sodium-antimony Molybdate and potassium-antimony Molybdate, preferably sodium Molybdate, or potassium Molybdate.

The inorganic salts present in the primers of the present invention can be metal salts and/or metallates. Metallates as used herein are anions or salts containing a metal atom ligated to one or more oxygen or other atoms, or to small groups. Examples of metallates that can be used in the present invention are molybdates, borates, sillicates, zirconates, tungstates, cobaltates, antimonates, and aluminates.

Non-limiting examples of such Molybdenum compounds are those selected from the group comprising: Mo, Molybdenum dioxide ($MoO_2$), Molybdenum trioxide ($MoO_3$), sodium molybdate ($Na_2MoO_4$) potassium molybdate ($K_2MoO_4$), ammonium molybdate (($NH_4)_2MoO_4$) and combinations thereof.

Optionally other metal oxides can be added next to the Molybdenium compounds in the primer compositions to further improve adherence. Non-limiting examples are: oxides of a metal chosen from the group consisting of Co, Fe, Cu, W, Mo and Sb. Particularly preferred is the addition of $Sb_2O_3$.

The primer composition of the present invention typically encompasses Molybdenum-compounds in a solvent such as water, ethanol, or propanol, and an inorganic salt can be added to the primer to improve cohesion of the primer and adherence to the substrate. Note that when Molybdenum-salts or Molybdates are used, the salt component as such also acts as an inorganic salt because it dissolves in water and forms a layer when the water evaporates. In such case, a separate inorganic salt does not need to be present in the primer. For example, when $Na_2MoO_4$ is used as the Mo-compound in the primer, the sodium salt will act as the inorganic salt.

The primer of the present invention further can comprise additives such as inorganic binders, fillers, and/or surface wetting agent(s).

The inorganic binder or filler can be added to the primer to improve attachment of the active metal or metal oxide components in the primer to the substrate and to improve the rheology and surface appearance of the enamel after firing. Examples of inorganic binders can e.g. be clays, silicates, wollastonite, phosphates, and colloidal solutions of e.g. silica or micronized glass (e.g. precipitated silica, colloidal silica or silica-sol) such as those commercially available as Ludox HS40 or Levasil 300.

Furthermore, the primer composition can comprise further additives such as are wetting agents, i.e. an agent that lowers the surface tension of water in order that the primer homogeneously spread on the substrate. Examples of such wetting agents are alcohols, detergents and soaps. A specific example is the commercially available fluortensid agent Bayowet FT248 (Bayer A.G.), or BYK348 (Byk-Gardner). In some embodiments, the primer of the present invention further comprises compounds such as borates such as sodium-borax or potassium-borax, which can improve the aspect and appearance of the enamel layer especially because they improve the wetting of the primed substrate by the molten enamel during firing.

In some embodiments additives such as borates, i.e. boron-containing oxyanions such as potassium-borate (e.g. borax), sodium-borate and the like, which can improve the aspect and appearance of the enamel layer can be added to the primer compositions.

In some embodiments, the primer coating liquid of the present invention further comprises other ingredients such as clay that can be used to improve the rheology of the primer on the substrate and as a neutral filler that can make the required amount of active components on the substrate less critical.

The present invention also provides for a method of improving adherence of enamels free from adherence-metal-oxides to an iron or steel substrate comprising the step of applying on said substrate, prior to application of the enamel, a primer composition as defined herein, wherein said primer composition is applied to said substrate in an amount of at least 0.5 g/m² to 100 g/m², preferably of between 0.1 g/m² to 80 g/m² dry coating weight of said metal, metal salt or metal oxide, preferably of said Molybdenum-compound.

The application of the primer to the substrate can be done by applied to said substrate by spraying, dipping, dry coating, or coil coating. Optionally said primer composition is dried onto the substrate, more preferably through hot air convection.

Alternatively, said primer composition can be applied to the substrate as a conversion coating, i.e. wherein part of the substrates surface is converted into the coating by a chemical or electro-chemical process In general a conversion coating results from the action of chemical or electro-chemical reactions upon a metal surface and contains part of the metal base material. The inventors have found that instead of applying a primer according to the present invention which contains adherence metal oxides to the steel surface, adherence providing compounds of the invention can also be formed on the steel surface as a conversion coating. Such a molybdate conversion coating formed on a steel substrate provides adherence of the enamel layer as well.

The invention further provides for a method for enameling an iron or steel substrate with an enamel free from adherence-metal-oxides, comprising the steps of:

- Applying on said substrate, prior to application of an enamel, a primer composition as defined herein, wherein said primer composition is applied to said substrate in an amount of at least 0.5 g/m$^2$ to 100 g/m$^2$, preferably of between 0.1 g/m$^2$ to 80 g/m$^2$ dry coating weight of said metal, metal salt or metal oxide, preferably of said Molybdenum-compound; and

- Applying on the top of said primer layer, said enamel frit, followed by a firing step, thereby obtaining an enameled iron or steel substrate.

In said methods, the primer composition as defined herein can be applied to the substrate through any suitable means, such as through spraying, dipping, dry coating, coil coating, etc. In addition, the primer composition can be dried onto the substrate, more preferably through hot air convection.

Alternatively, the primer composition can be applied to said substrate as a conversion layer.

In said methods, the enamel can be subsequently applied to the primed substrate using any suitable means. Such as through: wet dipping, flow-coating, spraying, wet electrostatic coating, electrophoretic coating, dusting or dipping, powder electrostatic coating (POESTA), or combinations thereof.

The present invention also provides for enameled steel or iron substrates according to the method of the invention. Such substrates can be distinguished from prior art enameled steel or iron substrates through analysis of the interface between the enamel and the steel or iron substrate. If the method according to the present invention is used, i.e. when a primer composition as defined herein is applied to the substrate prior to applying the frit and firing leading to the enamel coating, the metal, metal oxide, or metal salts present in the primer composition and resulting in the adherence providing effect on steel and iron will be present predominantly in the interface of the substrate and the enamel. In contrast, when enamels are used comprising these adherence providing metals or metal salts or oxides, they will be present throughout the whole enamel layer. In particular, substrates enameled using the method according to the present invention will only show presence of the adherence providing metal (or their salts or oxides) in the lower half of the enamel layer, more particularly in the lower 15% to 25% of the enamel layer with respect to the substrate.

This can be visualized using SEM or microscopic techniques. As an example, we have compared coated steel substrates in Figures 1 and 2, wherein the presence of Molybdenum compounds is clearly limited to the 15% region of the enamel closest to the substrate when the primer and method according to the invention was applied, while when using prior art technique such as the one of Kautz et al., 1945, using Molybdenum in the frit, the Molybdenum is dispersed throughout the enamel layer and the interface between the enamel and steel substrate is completely different resulting in a much stronger adherence when using the primer and method of the current invention.

The following non-limiting examples are intended to further clarify the invention.

## EXAMPLES

**Example 1: Examples of EcoPremails of the invention, tested for adherence of enamels without adherence oxides on steel surfaces.**

EP 3 231 894 A1

| | EP1ₐ | EP1_b | EP2ₐ | EP2_b | EP3ₐ | EP3_b | EP4ₐ | EP4_b | EP5ₐ | EP5_b |
|---|---|---|---|---|---|---|---|---|---|---|
| **Mo compound** | Na$_2$MoO$_4$ 20% | Na$_2$MoO$_4$ 50% | Na$_2$MoO$_4$ 20% | Na$_2$MoO$_4$ 20% | MoO$_3$ 40% | MoO$_3$ 7.50% | MoO$_2$ 48.50% | MoO$_2$ 7.50% | Mo 40% | Mo 7.50% |
| **Additional Mo compound** | - | - | Mo 10% | Mo 20% | | - | - | - | - | - |
| **Fillers (clay & silica)** | - | - | 10% | 4.50% | 1.20% | 25.63% | 1% | 27.43% | 1.20 % | 27.43% |
| **Wetting agent** | - | - | 0.5% | 0.50% | 0.50% | 0.07% | 0.5% | 0.07% | 0.50 % | 0.07% |
| **water** | 80% | 50% | 50% | 40% | 48.30 % | 50% | 50% | 50% | 48.3 0% | 50% |
| **others oxides** | - | - | - | Fe$_2$O$_3$ 5% | | 9.30% | | Fe$_2$O$_3$ 7.50% | - | Fe$_2$O$_3$ 7.50% |
| **Sodium borax** | - | - | 9.50% | 10% | 10% | 7.50% | - | 7.50% | 10% | 7.50% |

"EP" = EcoPremail primers

**13**

The above primers were applied on steel quality DC03ED (after EN10209) by wet spraying in an amount of 50g/m$^2$. After drying, the following frits of the Prince Belgium bvba assortment were applied by POESTA powder electrostatic application (the powders made as reported in DD 270 897 A1 and DD 296 265 A5) and fired, and the adherence was tested according to European standard EN10209. The table below gives the minimum and maximum adherence after firing the given enamel at their specific advised firing temperature (from 780-840 °C).

| | Adherence on steel substrate | | | | | | | | | | |
|---|---|---|---|---|---|---|---|---|---|---|---|
| | without primer | EP1a | EP1b | EP2a | EP2b | EP3a | EP3b | EP4a | EP4b | EP5a | EP5b |
| TR2500 | 5 | - | - | 1 | 1 | 1 | 1 | 1 - 2 | - | 1 | - |
| TC5650 | 5 | - | - | - | - | 1 | 1 | 1 | 1 | 1 | 1 |
| VP37/1887 | 5 | 3 | 3 | 1 | 1 | 1 | 1 | 2 - 3 | - | 1 | - |
| WF3702 | 5 | 2 | 2 | 1 | 1 | 1 | 1 | 1 | 1 | 1 | 1 |
| WR3220 | 5 | 3 | 3 | 2 | - | 1 | 1 | 1 | 1 | 1 | 1 |
| WR3534 | 5 | - | - | 2 | - | - | - | 2 - 3 | 1 | 1 | 1 |
| VP22/1513 | 5 | - | - | 1 - 2 | 2 | 1 | - | 1 | - | 1 | - |
| WR3870 | 5 | - | - | - | - | - | - | - | - | 2 | - |
| H-6820 | 5 | - | - | - | - | 1 | 1 | 1 | - | 1 | - |

All tested frits are free of adherence metal oxides.

"-" = not tested

When the steel substrate appears silvery bright there is no adherence at all (class 5), which was the case in the first column of the table below where no primer has been used. An adherence value of 4 already indicates that the pretreatment coating did have a positive effect on the adherence of the adherence oxide free enamel to the steel substrate. Class 1 indicates perfect adherence.

**Example 2: comparative examples from literature (molybdenum-oxides added to the frit)**

We performed trials based on the publications 'Molybdenum in enamels I' and 'Molybdenum in enamels II', by Kautz et al., 1945 (J. American Ceramic Society, Vol. 23 and 25). Kautz reported back in 1945 that when definite types of white or clear enamel are milled with certain molybdenum compounds, light-colored ground coats are produced. These ground coats show excellent adherence.

Further it was hypothesized in said paper that the addition of $Sb_2O_3$ and $MoO_3$ together to the mill containing a clear frit could improve the adherence. The authors specify that Sb oxide to Mo oxide weight ratio is 2 and that the best adherence would be obtained when 1 to 4% of $Sb_2O_3$ was used with $MoO_3$ ranging from 1 to 2%.

To compare this information with the results obtained in Example 1 above, the following trials have been done using a semi-opaque frit free from adherence oxide (VP37/1887), also used in Example 1:

a/ Addition of a Mo compound to the mill

| 100 g frit | 4g of $MoO_3$ | Reported to give poor to fair adherence |
|---|---|---|
| 100 g frit | 5.50g of ammonium Molybdate | Reported to give fair adherence |
| 100 g frit | 5.75g of sodium Molybdate | Reported to give fair to good adherence |

The combinations listed above were tested in combination with VP37/1887 and resulted in the following adherence:

| Milling formula | Adherence class |
|---|---|
| VP37/1887 + 4% $MoO_3$ | 5 |
| VP37/1887 + 5.50% Ammonium Molybdate | 5 |
| VP37/1887 + 5.75% Sodium Molybdate | 5 |

b/ Addition of $Sb_2O_3$ and MoO3 to the mill

Addition of $Sb_2O_3$ and MoO3 to the mill of 100 parts of VP37/1887 frit have also been tested. Two powder mixtures containing 3% $Sb_2O_3$ and 1.5% MoO3 for electrostatic application have been made and sprayed on steel plates. Firing has been done at 800 °C according to the used enamel type and also at 860 °C in accordance with the publication of Kautz et al., 1945.

| VP37/1887 + 3% $Sb_2O_3$ + 1.5% $MoO_3$ Fired at 800 °C for 4' | VP37/1887 + 3% $Sb_2O_3$ + 1.5% $MoO_3$ Fired at 860°C for 4' |
|---|---|
| Adherence class 5 | Adherence class 5 |

Samples fired at 800 °C or 860 °C during 4 minutes don't show any adherence to steel (adherence class 5).

We can hence conclude that the addition of Molybdenum-compounds directly to the frit milling or smelted in, does not significantly improve the adherence of an adherence oxide free frit to an iron alloy or steel substrate. When comparing these results with the adherence obtained in Example 1, with the same base frit VP37/1887, it becomes clear that the EcoPremail primer comprising molybdenum-compounds of the invention, applied as a primer layer on the steel or iron alloy substrate is outperforming the addition of molybdenum-compounds to the frits, which is highly unexpected. This also is clear when comparing Figures 1 and 2, where the interface made during firing with the EcoPremail primer has a completely different build up compared to the interface using Mo in the frit as suggested in Kautz et al., 1945.

**Example 3: Addition of iron oxide to Mo-compound**

In this example, the addition of Iron oxide to the primer composition was evaluated for effect on adherence on steel substrates.

The pretreatment coating was the following: $Na_2MoO_4$ + $Fe_3O_4$ (magnetite), comprising:

$$5g\ Na_2MoO_4 + 5g\ Fe_3O_4 + 10g\ water + 0{,}22g\ wetting\ agent$$

The primer was very easy to apply to the substrate and the adherence value was 1.

**Example 4: Adherence obtained using a primer based on tungsten oxide**

In this example, the addition of tungsten oxide to the primer composition was evaluated for effect on adherence on steel substrates.

The pretreatment coating was the following: $WO_3$ + Ludox HS40, comprising:

$$4g \ WO_3 + 4 \ g \ Ludox \ HS40 + 8g \ water + 0,11g \ wetting \ agent$$

The primer was very easy to spray on the substrate and the adherence was 3.

**Example 5: Adherence obtained using Co oxide**

In this example, the use of Cobalt in the primer composition instead of Molybdenum was evaluated for effect on adherence on steel substrates.

The pretreatment coating was the following: $Co_3O_4$ + Ludox HS40, comprising:

$$3 \ g \ Co_3O_4 + 3 \ g \ Ludox + 2 \ g \ water + 0.03 \ g \ wetting \ agent$$

The primer was very easy to apply on the substrate and the adherence was 2.

**Example 6: Molybdenum conversion layer**

Instead of applying a primer which contains adherence metal oxides to the steel surface, adherence providing compounds can be formed on the steel surface as a conversion coating. In general a conversion coating results from the action of chemical or electro-chemical reactions upon a metal surface and contains part of the metal base material. We have found that a molybdate conversion coating formed on a steel substrate provides adherence of the enamel layer as well. In order to form the molybdate conversion layer on steel, we used a 0.1 M Na2MoO4-H3PO4 aqueous solution at a pH-value of 2 as detailed in Kurosawa et al., 1989 (Corrosion Science, Vol. 29, pp. 1103-1114, 1989). Steel substrates were submerged in the solution at a temperature of 80 °C during 80 minutes. Under these conditions a dense $FeMO_4$ coating was formed on the surface and we measured a molybdenum surface concentration of about 1 $g/m^2$.

Preparation of samples:

- Chemical solution: 0.1 M $Na_2MoO_4$ enriched with $H_3NO_4$ to pH = 2
- Conversion treatment

    o Solution is heated to 80 °C
    o Samples are submerged while slightly agitating the solution
    o Submersion time: 80 minutes

Concentration of Mo as measured on the sample surface: 1 $g/m^2$

Enameling the steel substrate with molybdate conversion coating following the same processing parameters as example 1 gave the following results for the adherence of the enamel layer:

| Frit reference | TR2500 | TC5650 | H-6820 | WF3702 | VP37/1887 | WR3870 |
|---|---|---|---|---|---|---|
| adherence | 1 | 1-2 | 3-4 | 2-3 | 1-2 | 3 |

**Claims**

1. The use of a primer comprising:

    - Molybdenum-compounds selected from the group comprising: metallic Molybdenum, Molybdate, and Molybdenum-oxides,
    - water or solvents,

- one or more inorganic salt(s), and
- optionally one or more additive(s),

for providing adherence of adherence- metal-oxide free enamels to an iron alloy or steel substrate.

2.  The use according to claim 1, wherein said inorganic salt is a metal salt or a metallate, selected from the group comprising: molybdates, silicates, aluminates, zirconates, tungstates, cobaltates, antimonates, or borates, preferably molybdates and borates such as sodium-borate, potassium-borate, potassium molybdate, and sodium-molybdate.

3.  The use according to claim 1, wherein said primer additionally comprises an Antimony-compound, preferably an Antimony-oxide or Antimony-salt, most preferably $Sb_2O_3$ or $SbCl_3$.

4.  The use according to any one of claims 1 to 3, wherein said additive is an inorganic binder or filler such as clay, more preferably dispersing clay such as kaolinite, bentone or bentonite.

5.  The use according to any one of claims 1 to 4, wherein said primer additionally comprises one or more metal oxides selected from the group comprising: oxides of Ni, Co, Fe, W, Mo or Sb.

6.  The use according to any one of claims 1 to 5, wherein the Molybdenum-compound of said primer solution comprises one or more of the following combinations:

    - Molybdate alone or with Mo, $MoO_2$, $MoO_3$;
    - $MoO_3$ alone, or combined with Molybdate or $MoO_2$;
    - $MoO_2$ alone, or combined with Molybdate or $MoO_3$;
    - Metallic Molybdenum alone, or associated with Molybdate;

    or combinations thereof, wherein said Molybdate is selected from the group comprising: sodium Molybdate, potassium Molybdate, calcium Molybdate, bismuth Molybdate, cerium Molybdate, ammonium Molybdate, lithium Molybdate, barium Molybdate, antimony Molybdate, zinc Molybdate, lead Molybdate, iron Molybdate, tin Molybdate, barium-antimony Molybdate, calcium-antimony Molybdate, sodium-antimony Molybdate and potassium-antimony Molybdate, preferably sodium Molybdate, or potassium Molybdate.

7.  The use according to claim 6, wherein said primer composition combines any one of said Molybdenum-compound combinations with $Sb_2O_3$.

8.  A method of providing adherence of enamels free from adherence-metal-oxides to an iron or steel substrate comprising the steps of:

    - Applying on said substrate, prior to application of an enamel, a primer composition as defined in any one of claims 1 - 7, wherein said primer composition is applied to said substrate in an amount of 0.5 $g/m^2$ to 100 $g/m^2$ dry coating weight of said Molybdenum-compound, preferably of between 0.1 $g/m^2$ to 80 $g/m^2$ dry coating weight of said Molybdenum-compound.

9.  A method for enameling an iron or steel substrate with an enamel free from adherence-metal-oxides, comprising the steps of:

    - Applying on said substrate, prior to application of an enamel, a primer composition as defined in any one of claims 1 - 7, wherein said primer composition is applied to said substrate in an amount of 0.5 $g/m^2$ to 100 $g/m^2$ dry coating weight of said Molybdenum-compound, preferably of between 0.1 $g/m^2$ to 80 $g/m^2$ dry coating weight of said Molybdenum-compound; and
    - Applying on the top of said primer layer, said enamel frit, followed by a firing step, thereby obtaining an enameled iron or steel substrate.

10. The method according to claim 8 or 9, wherein said primer composition is applied to said substrate by spraying, dipping, dry coating, or coil coating.

11. The method according to anyone of claims 8 to 10, wherein said primer composition is dried onto the substrate, more preferably through hot air convection.

12. The method according to claim 8 or 9, wherein said primer composition is applied to substrate as a conversion layer.

13. Use according to any one of claims 1 to 7, or method according to any one of claims 8 to 11 wherein said enamel is transparent, white, or semi-opaque.

14. Use according to any one of claims 1 to 7, or 13, or method according to any one of claims 38 to 42, wherein said enamel is colored using pigments.

15. The use according to any one of claims 1 to 7, or 13 to 14 or the method according to any one of claims 8 to 12, wherein said substrate comprises a material selected from the group comprising: enameling steel, aluminized steel, pickled nickel coated steel, stainless steel, or cast iron.

16. The use according to any one of claims 1 to 7, or 13 to 15, or the method according to any one of claims 38 to 42, comprising the application of the primer on the cleaned and degreased metal, followed by application of the enamel by all possible methods.

17. The method according to any one of claims 8 to 12, wherein said firing step is done at a firing temperature of between 700 and 900 °C for about 1 to 15 minutes.

18. The method according to any one of claims 8 to 12, wherein additionally a second enamel is applied on the first enamel, followed by a second firing step.

19. A primer for providing adherence of heavy-metal free enamels to an iron alloy or steel substrate comprising:

- from 30-50 % w/w water
- from 15-50 %w/w Molybdenum-compounds selected from the group comprising: metallic Molybdenum, Molybdate, and Molybdenum-oxides;
- from 0-10 % w/w inorganic salt(s),
- from 0.25-20- % w/w filler(s),
- from 0-20 % w/w further metal oxides, and
- from 0.05-0.5 % w/w surface wetting agent(s), preferably wherein said inorganic salt is a metal salt or a metallate, selected from the group comprising: molybdates, silicates, aluminates, zirconates, tungstates, cobaltates, antimonates, or borates, more preferably sodium-borate, potassium-borate, potassium molybdate, or sodium-molybdate.

20. The primer composition according to claim 19, comprising:

- from 45-50 % w/w water,
- 15-20 % w/w Molybdate(s),
- 0-20 % w/w Mo, $MoO_2$, or $MoO_3$,
- 0.25-10 % w/w filler(s),
- 0.05-0.5 % w/w wetting agent(s), and
- 5-10 % w/w inorganic salt(s), preferably wherein said inorganic salt is a metal salt or a metallate, selected from the group comprising: molybdates, silicates, aluminates, zirconates, tungstates, cobaltates, antimonates, or borates, more preferably sodium-borate, potassium-borate, potassium molybdate, or sodium-molybdate

21. The primer composition according to claim 20, wherein said Molybdates are selected from the group comprising: sodium Molybdate, potassium Molybdate, calcium Molybdate, bismuth Molybdate, cerium Molybdate, ammonium Molybdate, lithium Molybdate, barium Molybdate, antimony Molybdate, zinc Molybdate, lead Molybdate, iron Molybdate, tin Molybdate, barium-antimony Molybdate, calcium-antimony Molybdate, sodium-antimony Molybdate and potassium-antimony Molybdate, preferably sodium Molybdate, or potassium Molybdate

22. An enamel coated object, comprising a primer layer comprising the primer composition according to anyone of claims 19 to 21, forming an interface between the substrate and the enamel coating.

23. The object according to claim 22, wherein only said interface comprises Molybdenum.

24. The object according to claim 22 or 23, wherein said Molybdenum is detectable only in the lower 50% of the enamel

**EP 3 231 894 A1**

coating starting from the interface, preferably in the lower 15-25% of the enamel coating starting from the interface.

25. Use of an aqueous dissolution comprising:

    - 20-40 % w/w Molybdate, and
    - 60-80 % w/w water, as a conversion coating or precoating for providing adherence of enamels free of adherence metal oxides to iron alloy or steel substrates.

26. A method of providing adherence of enamels free from adherence-metal-oxides to an iron alloy or steel substrate comprising the chemical conversion of a molybdate composition to said substrate.

27. The method according to claim 26, wherein said chemical conversion is done by:

    - submerging said substrate in a molybdate solution,
    - lowering the pH to below 4, preferably between 1 and 3, preferably of between 1.5 and 2.5, more preferably of about 2, and optionally
    - heating the composition to a temperature of between 60 and 90°C, preferably of between 70 and 85 °C, more preferably of about 80°C, for a period of between 50 and 100 minutes, preferably of about 60 to 90 minutes.

28. The method according to claim 26 or 27, wherein said Molybdate is selected from the group comprising: sodium Molybdate, potassium Molybdate, calcium Molybdate, bismuth Molybdate, cerium Molybdate, ammonium Molybdate, lithium Molybdate, barium Molybdate, antimony Molybdate, zinc Molybdate, lead Molybdate, iron Molybdate, tin Molybdate, barium-antimony Molybdate, calcium-antimony Molybdate, sodium-antimony Molybdate and potassium-antimony Molybdate, preferably sodium Molybdate, or potassium Molybdate.

**Figure 1:**

**Figure 2:**

Europäisches
Patentamt

European
Patent Office

Office européen
des brevets

## EUROPEAN SEARCH REPORT

Application Number

EP 16 16 4941

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 962 490 A (WARD RODNEY L) 8 June 1976 (1976-06-08) | 1,2,6,16 | INV. C23C22/00 |
| A | * column 7, line 57 - line 65; claims; examples * | 13 | C23D3/00 C23D5/02 |
| X | EP 0 698 675 A1 (METALLGESELLSCHAFT AG [DE]) 28 February 1996 (1996-02-28) * page 2, line 35 - page 5; claims * | 1,2,6, 13,16 | |

TECHNICAL FIELDS
SEARCHED      (IPC)

C23C
C23D

~~The present search report has been drawn up for all claims~~

| Place of search | Date of completion of the search | Examiner |
|---|---|---|
| The Hague | 1 March 2017 | Brothier, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

# EP 3 231 894 A1

Europäisches Patentamt
European Patent Office
Office européen des brevets

Application Number

EP 16 16 4941

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

2(completely); 1, 6, 13, 16(partially)

☐ The present supplementary European search report has been drawn up for those parts of the European patent application which relate to the invention first mentioned in the claims (Rule 164 (1) EPC).

22

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 2(completely); 1, 6, 13, 16(partially)

    Use of a primer as described in claim 1 for providing adherence of adherence-metal oxide free enamels to an iron alloy or steel.

1.1. claims: 2(completely); 1(partially)

    Use of a primer as in claim 1, wherein the salt is chosen in the group of claim 2.

1.2. claims: 1, 6(all partially)

    Use of a primer as in claim 1 wherin said primer contains a Molybdenum conpound as in claim 6.

1.3. claims: 1, 13(all partially)

    Use of a primer as in claim 1 wherein the enamel is transparent, semi-opaque or white as in claim 1.

1.4. claims: 1, 16(all partially)

    Use of a primer as in claim 1 wherein the substrate is a cleaned or degreased metal as in claim 16.
    ---

2. claims: 3, 7(completely); 1, 6(partially)

    Use of a primer as in claim 1 wherin said primer contains an Antimony compound.
    ---

3. claims: 4(completely); 1(partially)

    Use of a primer as in claim 1 with an additive as in claim 4.
    ---

4. claims: 5(completely); 1(partially)

    Use of a primer as in claim 1 wherin said primer contains in addition an oxide as in claim 5
    ---

5. claims: 8-12, 17, 18(completely); 13-16(partially)

    Method for providing adherence of enamel on steel as in claim 8 or 9.
    ---

Europäisches
Patentamt

European
Patent Office

Office européen
des brevets

**LACK OF UNITY OF INVENTION
SHEET B**

Application Number

EP 16 16 4941

The Search Division considers that the present European patent application does not comply with the
requirements of unity of invention and relates to several inventions or groups of inventions, namely:

6. claims: 13, 14(partially)

    Use of a primer as in claim 1 wherein the enamel is
    transparent, semi opaque or pigmented
           ---

7. claims: 1, 15(all partially)

    Use of a primer as in claim 1 wherein the substrate is as in
    claim 15.
           ---

8. claim: 16(partially)

    Use of a primer as in claim 1 wherein the substrate is
    processed as in claim 16
           ---

9. claims: 19-24

    Primer as described in claim 19. Enameled obejct by the
    method of claim 19
           ---

10. claim: 25

    Use of a primer as described in claim 25 as a conversion
    coating or precoating as in claim 25
           ---

11. claims: 26-28

    Method for providing adherence of enamels to metals as in
    claim 26.
           ---

Please note that all inventions mentioned under item 1, although not
necessarily linked by a common inventive concept, could be searched
without effort justifying an additional fee.

## ANNEX TO THE EUROPEAN SEARCH REPORT
## ON EUROPEAN PATENT APPLICATION NO.

EP 16 16 4941

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2017

| Patent document cited in search report | | Publication date | Patent family member(s) | | Publication date |
|---|---|---|---|---|---|
| US 3962490 | A | 08-06-1976 | DE | 2516842 A1 | 28-10-1976 |
| | | | FR | 2302349 A1 | 24-09-1976 |
| | | | GB | 1496192 A | 30-12-1977 |
| | | | US | 3962490 A | 08-06-1976 |
| EP 0698675 | A1 | 28-02-1996 | DE | 4429936 A1 | 29-02-1996 |
| | | | EP | 0698675 A1 | 28-02-1996 |
| | | | US | 5688340 A | 18-11-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009087217 A1
- DD 270897 A1
- DD 296265 A5

### Non-patent literature cited in the description

- **KAUTZ et al.** *J. American Ceramic Society, 1945,* 1945, vol. 25 (6), 160-163
- **KAUTZ et al.** *Molybdenum in the frit,* 1945
- **AUTZ et al.** Molybdenum in enamels I' and 'Molybdenum in enamels II. *J. American Ceramic Society,* 1945, vol. 23 and 25
- **KUROSAWA et al.** *Corrosion Science,* 1989, vol. 29, 1103-1114